# EUROPEAN PATENT APPLICATION

(11) **EP 3 706 033 A1**
(43) Date of publication of application: **09.09.2020**
(21) Application number: 18874564.0
(22) Date of filing: 29.10.2018
(51) Int. Cl.: G06K 9/00

(54) **COLLIMATOR, OPTICAL FINGERPRINT RECOGNIZER, AND FULLSCREEN**

(30) Priority: 31.10.2017 CN 201711044121
(71) Applicant: Vivo Mobile Communication Co., Ltd., Dongguan, Guangdong 523860 (CN)
(72) Inventor: WU, Chunwei, Dongguan Guangdong 523860 (CN)
(74) Representative: Conti, Marco
(86) International application number: PCT/CN2018/112408
(87) International publication number: WO 2019/085859

(57) **Abstract**

The present disclosure discloses a collimator, an optical fingerprint reader and a full screen display. The collimator comprises at least two collimation layers and one or more light transmitting substrates, each of which is arranged between two adjacent collimation layers, wherein the at least two collimation layers have a plurality of collimation holes, and the corresponding collimation holes of the two adjacent collimation layers are aligned holes, or the corresponding collimation holes of the two adjacent collimation layers are coupled to each other in a staggered manner.

## Description

### CROSS-REFERENCE TO RELATED APPLICATION

This application claims a priority to Chinese Patent Application No. 201711044121.6 filed on October 31st, 2017, the disclosure of which is incorporated in its entirety by reference herein.

### TECHNICAL FIELD

The present disclosure relates to the field of computer technology, and in particular to a collimator, an optical fingerprint reader and a full screen display.

### BACKGROUND

At present, a fingerprint recognition module for mobile phones is mainly based on capacitance, but because the fingerprint recognition module is unable to achieve the transmission of a cover glass having a thickness of 0.5 millimeter or greater, it is usually necessary to form grooves on the cover glass to obtain a reduced thickness in the range of 0.3 millimeter to 0.4 millimeter. Since the thickness of the cover glass which can be transmitted is related to physical principle of capacitive technology, it is difficult to improve it with time. It is usually considered that the limit of the thickness to be transmitted is in the range of 0.3 millimeter to 0.4 millimeter. Therefore, if the capacitive fingerprint recognition module is to be applied to a mobile phone and as a hidden fingerprint recognition application, it is necessary to transmit the cover glass having the thickness of 0.5 millimeter or greater. As a result, the capacitive technology is almost to be abandoned, and some fingerprint manufacturers have begun to shift the research to optical fingerprint recognition.

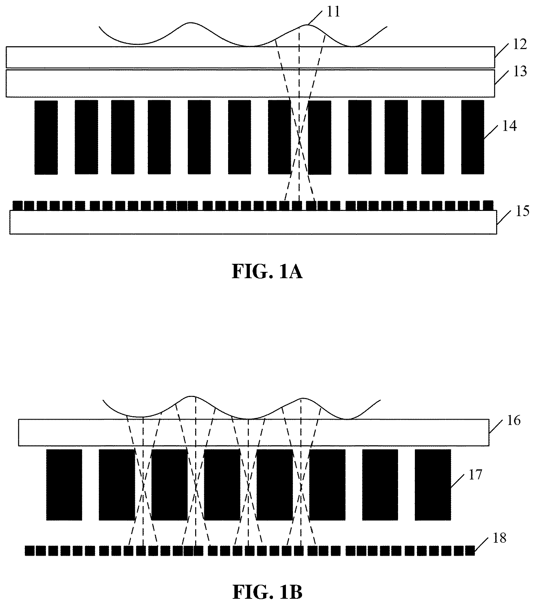

Referring to FIG. 1A, a major problem of the current optical fingerprint recognition is that, due to the existence of a cover plate 12 and a plastic organic light emitting diode (POLED) 13, an under-screen fingerprint recognition module is at a distance of at least 0.5 millimeter from an image of a fingerprint 11, and since an optical sensor 15 has no optical imaging system like a lens of a camera, the obtained fingerprint image will be blurred because of relying merely on the collimation of a collimation layer 14. Further, if a silicon-based complementary-metal-oxide-semiconductor (CMOS) optical sensor is used, it will be undesirable if it is applied to a full screen display due to high cost.

In addition, referring to FIG. 1B, there is another technical solution in which deep and small holes 17 arranged between the cover plate 16 and the sensor layer 18 are used as a collimator. If the small hole has a diameter of 5 micrometers, its depth may need to be as large as 50 micrometers in order to make a collimation angle small enough. However, the collimator of such a thickness is generally difficult to be manufactured by a panel factory or a semiconductor factory; and if an optical fiber is used as the collimator, the cost will be increased and the cost of manufacturing the optical fiber will be very high.

### SUMMARY

Embodiments of the present disclosure provide a collimator that includes at least two collimation layers and one or more light-transmissive substrates, each of which is arranged between two adjacent ones of the at least two collimation layers. The at least two collimation layers have a plurality of collimation holes, and the corresponding collimation holes of the two adjacent collimation layers are aligned holes, or the corresponding collimation holes of the two adjacent collimation layers are coupled to each other in a staggered manner.

Optionally, the two adjacent collimation layers have a same number of collimation holes, and the corresponding collimation holes of the two adjacent collimation layers are arranged opposite to each other.

Optionally, there is one or more position-adjustable collimation layers among the at least two collimation layers.

Optionally, the at least two collimation layers are made of a light-shielding material.

Embodiments of the present disclosure further provide an optical fingerprint reader that includes a cover plate, an optical sensor layer and the collimator as described above. The collimator is arranged between the cover plate and the optical sensor layer.

Optionally, the collimation holes of one of the at least two collimation layers closest to the optical sensor layer have a one-to-one relationship with sensor pixels of the optical sensor layer.

Optionally, the collimation holes of one of the at least two collimation layers closest to the optical sensor layer have a one-to-many relationship with sensor pixels of the optical sensor layer.

Optionally, the collimation holes of one of the at least two collimation layers closest to the optical sensor layer have a many-to-one relationship with sensor pixels of the optical sensor layer.

Embodiments of the present disclosure further provide a full screen display that includes an organic light emitting diode (OLED) layer and the optical fingerprint reader as described above. The OLED layer is arranged between the cover plate and the collimator, and the collimator and the optical sensor layer cover the entire OLED layer.

Optionally, the OLED layer is a flexible OLED layer or a glass OLED layer.

### BRIEF DESCRIPTION OF THE DRAWINGS

The drawings described herein are used to provide a further understanding of the present disclosure and constitute a part of the present disclosure. The exemplary embodiments of the present disclosure and the description thereof are used to explain the present disclosure, and do not constitute any improper limitation of the present disclosure. In the drawings:
FIGS. 1A and 1B are schematic structural diagrams of collimators in related art;
FIG. 2 is a schematic structural diagram of a collimator provided in an embodiment 1 of the present disclosure;
FIG. 3 is a schematic structural diagram of an optical fingerprint reader provided in an embodiment 3 of the present disclosure; and
FIG. 4 is a schematic structural diagram of a full screen display provided in an embodiment 4 of the present disclosure.

### DETAILED DESCRIPTION

In order to make the objects, technical solutions and advantages of the present disclosure more apparent, the technical solutions of the present disclosure will be described hereinafter in a clear and complete manner in conjunction with the embodiments of the present disclosure and corresponding drawings. It is evident that the described embodiments are a part, rather than all, of the embodiments of the present disclosure. Based on the embodiments herein, the other embodiments that can be obtained by those of ordinary skill in the art without exercising any creative work shall fall within the protection scope of the present disclosure.

The technical solutions provided in the embodiments of the present disclosure will be described hereinafter in detail with reference to the drawings.

### Embodiment 1

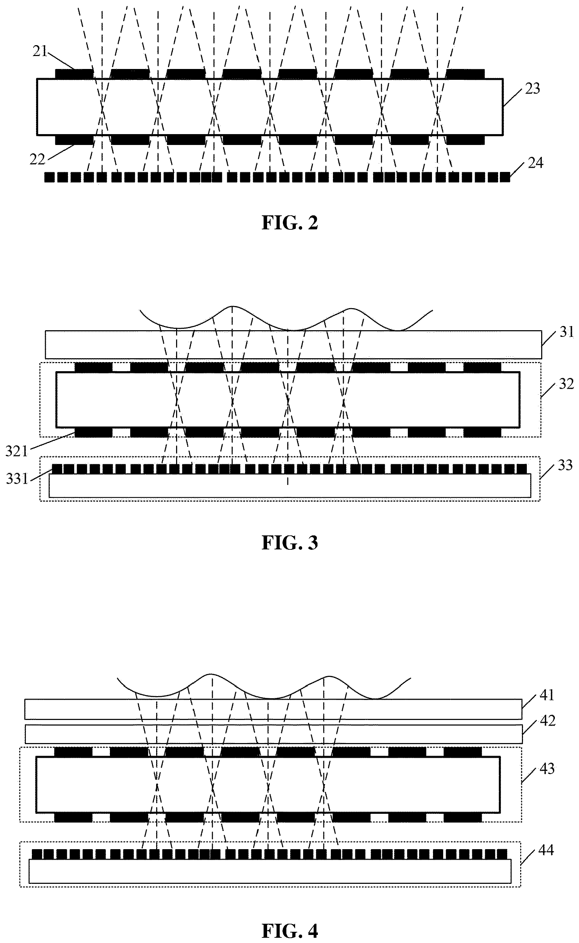

FIG. 2 is a schematic structural diagram of a collimator provided in an embodiment 1 of the present disclosure. Referring to FIG. 2, the collimator may specifically include at least two stacked collimation layers 21 and 22 and one or more light-transmissive substrates 23, each of which is arranged between two adjacent collimation layers.

The at least two collimation layers 21, 22 have a plurality of collimation holes, and the corresponding collimation holes of two adjacent collimation layers 21, 22 are aligned holes, or are coupled to each other in a staggered manner, so as to collimate light emitted from a light source 24.

The at least two collimation layers 21 and 22 are made of a light-shielding material. For example, they are composed of a pure aluminum foil strip and a transparent polyester film strip. The light-transmissive substrate 23 is made of a light-transmissive material, such as glass and polymers. The collimation holes can have circular, regular hexagonal, triangular or other shapes, and they can be circular here, for example.

In this embodiment, the aligned holes may be at least two collimation holes whose axes are on a same straight line, and the aligned holes may be implemented in such a manner that the collimation layers 21, 22 are configured to have a same number of collimation holes which are distributed in a same manner and have a same size, and the corresponding collimation holes of the collimation layers 21 and 22 are arranged opposite to each other.

In this embodiment, the coupling of the corresponding collimation holes in the collimation layers 21 and 22 in the staggered manner may be implemented in such a manner that respective light receiving angles of the collimation holes in the two adjacent collimation layers 21 and 22 are calculated from thicknesses of the transparent substrate 23 and each of the collimation layers 21 and 22, and distribution positions, shapes, and sizes of the collimation holes in the collimation layers 21 and 22, and then the position of any one or more of the collimation layers 21 and 22 is customarily adjusted to realize the coupling of the collimation holes in the collimation layers 21 and 22 in the staggered manner.

In this implementation, the staggering may be the staggering of two adjacent collimation layers, or may be a case where odd-numbered collimation layers exactly overlap in a stacking direction of the collimation layers and even-numbered collimation layers exactly overlap in the stacking direction; or, the collimation layers may be staggered on a group basis, and each group may include a variable number of collimation layers. In addition, the thicknesses of the collimation layers may not be identical.

It should be also noted that FIG. 2 shows a structure having only two collimation layers. For a structure having three or more collimation layers, it is not difficult to understand that if one collimation layer is added, a layer of a light-transmissive substrate will be added between the newly-added collimation layer and the collimation layer closest to the newly-added collimation layer. In addition, the coupling of the collimation holes in three or more collimation layers in a staggered manner is similar to that of the two collimation layers, and is not repeated here.

It can be seen that the embodiment of the present disclosure, in which a single-layered collimator layer having deep and small through holes is replaced with a structure consisting of two collimation layers and a light-transmissive substrate so as to achieve the collimation effect by using a thinner panel, has advantages of a simple processing process and low cost. In detail, a very thin layer of black material can be formed by, for example, a method for manufacturing a black matrix (BM) of a liquid crystal display (LCD). Generally, the BM process can achieve the application of a layer of material of about 2 micrometers, making it difficult to form deep and small holes, but it can be used to form a collimation effect similar to that of the deep and small holes by applying the material on both upper and lower sides of a transparent substrate, and the process is simple and cheap. Moreover, in this embodiment, the transparent substrate is provided to reduce the thickness required for the collimation layer, so as to further reduce the manufacturing cost while ensuring the collimation effect.

### Embodiment 2

On the basis of the embodiment 1, this embodiment 2 further provides an illuminator which includes a light source configured to emit light and the collimator of the embodiment 1 configured to collimate the light emitted from the light source.

For example, a collimator can be placed between a lamp and a lampshade to control an irradiation angle of the electric lamp.

Thus, by applying the collimator to the illuminator in this embodiment, a light output angle of the illuminator can be adjusted based on the collimation of the light by the collimator.

### Embodiment 3

FIG. 3 is a schematic structural diagram of an optical fingerprint reader provided in the embodiment 3 of the present disclosure. Referring to FIG. 3, the optical fingerprint reader may specifically include a (protective) cover plate 31, an optical sensor layer 33, and the collimator 32 described in the embodiment 1. The collimator 32 is arranged between the cover plate 31 and the optical sensor layer 33, and configured to collimate light emitted from the optical sensor layer 33.

The collimation holes of a collimation layer 321 of the at least two collimation layers in the collimator 32 closest to the optical sensor layer 33 may have a one-to-one, one-to-many, or many-to-one relationship with sensor pixels of the optical sensor layer 33.

It is not difficult to understand that how the correspondence between the collimation holes of the collimation layer 321 and the sensor pixels 331 is set can be determined based on actual needs of a user. Take FIG. 3 as an example, in which a plurality of sensor pixels 331 can be set to correspond to one collimation hole so that the optical sensor can collect enough optical signals, and a clearer fingerprint image can be thus obtained.

It can be seen that the collimator based on the two layers of small holes in this embodiment collimates the light emitted by the optical sensor to avoid light leakage and achieve the purpose of accurately recognizing fingerprints.

### Embodiment 4

FIG. 4 is a schematic structural diagram of a full screen display provided in an embodiment 4 of the present disclosure. Referring to FIG. 4, the full screen display may specifically include an OLED layer 42 and an optical fingerprint reader in the embodiment 3.

The OLED layer 42 is arranged between the cover plate 41 and the collimator 43 (the collimation layers), and the collimator 43 and the optical sensor layer 44 cover the entire OLED layer 42.

The OLED layer 42 is a flexible OLED layer or a glass OLED layer.

It should be noted that a first implementation of full-screen fingerprint recognition of the present disclosure is as follows. A plastic OLED (POLED) is a well-developed flexible OLED or glass OLED, and a cover glass 41 is placed above it and an optical sensor layer 44 and a collimator 43 are placed under the entire OLED module. The glass-based optical sensor layer may be an on/off thin film transistor (TFT) + photo TFT, or an on/off TFT + a photo diode (a positive intrinsic negative (PIN) photo diode). Take FIG. 4 as an example, in which a light receiving angle of an optical fiber is about 7 degrees when a module of 1.1 micrometers is to be penetrated without light mixture. The collimation holes can have a one-to-one relationship with the sensor pixels, that is, a fiber optic tube (an optical fiber collimator) corresponds to one pixel. Alternatively, the collimation holes may have a one-to-many or many-to-one relationship with the sensor pixels.

It can be seen that this embodiment based on the above-mentioned collimator can allow the fingerprint recognition module to be arranged below the OLED layer 42 to achieve that fingerprint imaging can be clearly applied to a large-area glass-based image sensor without affecting or sacrificing the design or performance of the original OLED. It is thus possible to achieve the technology of full screen displays of mobile phones and pads, for example. Moreover, due to the low cost of the double-layered or multi-layered small-hole collimator structure, the production cost of the full screen display can be further reduced.

It should be noted that the terms "including", "comprising" or any other variants thereof are intended to cover non-exclusive inclusion, such that a process, method, product or device including a list of elements does not include only those elements, but may include other elements not expressly listed or inherent to such a process, method, product, or device. Without more constraints, the element defined by the sentence "including a ..." does not preclude the existence of additional identical elements in the process, method, product or device including the element.

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media (including, but not limited to, a magnetic disk memory, a compact disk read-only memory (CD-ROM), an optical memory, etc.) containing computer-usable program codes therein.

The above are only embodiments of the present disclosure and are not intended to limit the present disclosure. It will be apparent to those skilled in the art that various modifications and variations can be made to the present disclosure. Any modification, equivalent replacement, and improvement made within the spirit and principle of the present disclosure shall be included in the scope of claims of the present disclosure.

## Claims

1. A collimator, comprising at least two collimation layers and one or more light-transmissive substrates, each of which is arranged between two adjacent ones of the at least two collimation layers,
wherein the at least two collimation layers have a plurality of collimation holes, and the corresponding collimation holes of the two adjacent collimation layers are aligned holes, or
the corresponding collimation holes of the two adjacent collimation layers are coupled to each other in a staggered manner.

2. The collimator according to claim 1, wherein the two adjacent collimation layers have a same number of collimation holes, and the corresponding collimation holes of the two adjacent collimation layers are arranged opposite to each other.

3. The collimator according to claim 1, wherein there is one or more position-adjustable collimation layers among the at least two collimation layers.

4. The collimator according to claim 1, wherein the at least two collimation layers are made of a light-shielding material.

5. An optical fingerprint reader, comprising a cover plate, an optical sensor layer and the collimator according to any one of claims 1 to 4,
wherein the collimator is arranged between the cover plate and the optical sensor layer.

6. The optical fingerprint reader according to claim 5, wherein the collimation holes of one of the at least two collimation layers closest to the optical sensor layer have a one-to-one relationship with sensor pixels of the optical sensor layer.

7. The optical fingerprint reader according to claim 5, wherein the collimation holes of one of the at least two collimation layers closest to the optical sensor layer have a one-to-many relationship with sensor pixels of the optical sensor layer.

8. The optical fingerprint reader according to claim 5, wherein the collimation holes of one of the at least two collimation layers closest to the optical sensor layer have a many-to-one relationship with sensor pixels of the optical sensor layer.

9. A full screen display, comprising an organic light emitting diode (OLED) layer and the optical fingerprint reader according to claim 5 or 6,
wherein the OLED layer is arranged between the cover plate and the collimator, and the collimator and the optical sensor layer cover the entire OLED layer.

10. The full screen display according to claim 9, wherein the OLED layer is a flexible OLED layer or a glass OLED layer.
